# EUROPEAN PATENT SPECIFICATION

(11) **EP 2 923 819 B1**
(45) Date of publication and mention of the grant of the patent: **04.09.2019**
(21) Application number: 15160112.7
(22) Date of filing: 20.03.2015
(51) Int. Cl.: B29C 65/16, B29L 31/00, B29L 31/30, B29C 65/00, B29L 11/00, F21V 9/08, B29K 101/12, F21Y 115/30, F21Y 115/10, F21S 41/29, F21S 43/27

(54) **METHOD OF MANUFACTURE OF AN AUTOMOTIVE LIGHT**
VERFAHREN ZUR HERSTELLUNG EINER FAHRZEUGLEUCHTE
PROCÉDÉ DE FABRICATION D'UN PHARE DE VÉHICULE

(30) Priority: 28.03.2014 IT PD20140080
(43) Date of publication of application: 30.09.2015
(73) Proprietor: Automotive Lighting Italia S.p.A. A Socio Unico, 10078 Venaria Reale, (TO) (IT)
(72) Inventor: Boero, Cristiano, I-10078 Venaria Reale, Torino (IT); Ferigo, Domenico, I-10078 Venaria Reale, Torino (IT); Schiccheri, Nicola, I-10078 Venaria Reale, Torino (IT); Leone, Fabio, I-10078 Venaria Reale, Torino (IT); Buzzurro, Alessandro, I-10078 Venaria Reale, Torino (IT)
(74) Representative: Mitola, Marco

(56) References cited:
- JP-A- 2003 123 506
- JP-A- 2007 109 429
- JP-A- 2011 255 628
- JP-A- 2012 028 143
- US-A1- 2006 126 355

## Description

### FIELD OF APPLICATION

The present invention relates to a method of manufacture of an automotive light.

### STATE OF THE ART

The term automotive light is understood to mean indifferently a rear automotive light or a front automotive light, the latter also known as a headlight.

As is known, an automotive light is a lighting and/or signalling device of a vehicle comprising at least one external automotive light having a lighting and/or signalling function towards the outside of the vehicle such as for example a sidelight, an indicator light, a brake light, a rear fog light, a reverse light, a dipped beam headlight, a main beam headlight and the like.

The automotive light, in its simplest form comprises a container body, a lenticular body and at least one light source.

The lenticular body is placed so as to close a mouth of the container body so as to form a housing chamber. The light source is arranged inside the housing chamber, which may be directed so as to emit light towards the lenticular body, when powered with electricity.

The method of manufacture of an automotive light, once the various components have been assembled, must provide for the attachment and hermetic sealing of the lenticular body to the container body.

Such sealing and attachment is usually performed by welding.

Naturally, the welding may also regard other components of a more complex automotive light, for example arranged inside the housing chamber.

The solutions of the prior art provide for welds using various techniques. From a mechanical point of view, the welds of the prior art make it possible to realise joints which are reliable over time both from the mechanical point of view, considering the continuous mechanical and thermal stresses (vibrations, and atmospheric conditions) to which an automotive light is continually subjected, and from the sealing point of view, for example preventing any infiltration of water or dirt from the outside towards the inside of the light.

The assembly techniques of the prior solutions are not however free from drawbacks, since the welding processes of the lenticular bodies to the container body are rather complex, slow and therefore expensive.

For example, it is known of to use vibration welding techniques for the assembly of automotive lights. To date, laser welding applications in automotive lights, with the techniques currently in use, are not very efficient given that it is necessary to weld together complex geometries such as those of automotive lights.

In fact, the lenticular bodies and the container bodies of automotive lights are made of polymeric materials and comprise highly complex geometries with curved or straight coupling surfaces having inclinations highly variable along the entire perimeter of the mutual coupling.

Moreover, as known, a laser welding process of polymeric bodies assumes, in its most common meaning, the localized supply of thermal energy, capable of locally melting polymeric bodies respectively having good transmittance and good absorbance of an electromagnetic radiation emitted by a laser source, such as a laser diode.

More specifically, the light energy of the electromagnetic radiation emitted by the laser source is transformed into heat during its absorption in the absorbent polymer body. The absorbent polymer body thus melts locally and at the same time conducts heat to the transmissive polymer body in a defined welding area corresponding to the interface area between the bodies in contact. The softened polymeric bodies can consequently penetrate each other, connecting permanently once cooled.

In headlights, the polymeric bodies consist, for example, of the lenticular body and of the container body of the automotive light, where the lenticular body acts as a transmissive polymeric body, while the container body serves as an absorbent polymeric body.

However, the complex geometry of automotive lights or their components such as the container body and the lenticular body are ill-adapted to current laser welding techniques which are in fact optimised for applications on flat walls, simple geometries and relatively thin thicknesses of the bodies.

It follows that laser welding techniques are currently little used on automotive lights in that they do not guarantee satisfactory results and in any case not at competitive costs/times with alternative welding techniques. Such solutions are known for example from US2006/126355 A1, JP 2003 123506 A, JP 2007 109429 A, JP 2012 028143 A. JP 2011 255628 A discloses a method of manufacture of an automotive light according to the preamble of claim 1.

There is then a further peculiarity of automotive lights that complicates, further discourages and makes current laser welding techniques inconvenient.

In fact, a component of the automotive light, for example the lenticular body, can be crossed by light emitted by the light source so as to realise a light of the automotive light. The lenticular body can assume, therefore, a colouration, which gives the light emitted by the light source the colour required by regulations. For example, a stop light of the automotive light may be realised with a substantially white light source and a lenticular body tending to red.

However, the coloured lenticular body, for example tending to red, absorbs a lot of light energy compared to a clear lenticular body during the laser welding process, to the detriment of the light energy provided by the laser source, which must be able to provide a predetermined light energy in the welding area. The increased absorption due to the presence of a coloured lenticular body which filters, acting as the transmission element, the radiation emitted, requires the use of higher power laser beams and consequently with high consumption and welding costs.

In the light of all the above considerations, laser welding techniques are little used to date on automotive lights since they are too complex and expensive, as well as inconvenient to devise compared to alternative welding techniques, such as for example friction welding.

### PRESENTATION OF THE INVENTION

The purpose of the invention is to devise a laser welding method of polymeric bodies used in automotive lights able to reduce the power of the laser source compared to that provided for by the prior art.

The purpose of the present invention is therefore to perform welding of automotive lights by means of a laser welding technique overcoming the technical drawbacks related to the specific nature of automotive lights which to date make this welding technique inconvenient and expensive.

Such purpose is achieved by a method of manufacture of an automotive light according to claim 1.

Other embodiments of the present invention are described in the dependent claims.

### DESCRIPTION OF THE DRAWINGS

Further characteristics and advantages of the present invention will be more clearly comprehensible from the description given below of its preferred and non-limiting embodiments, wherein:

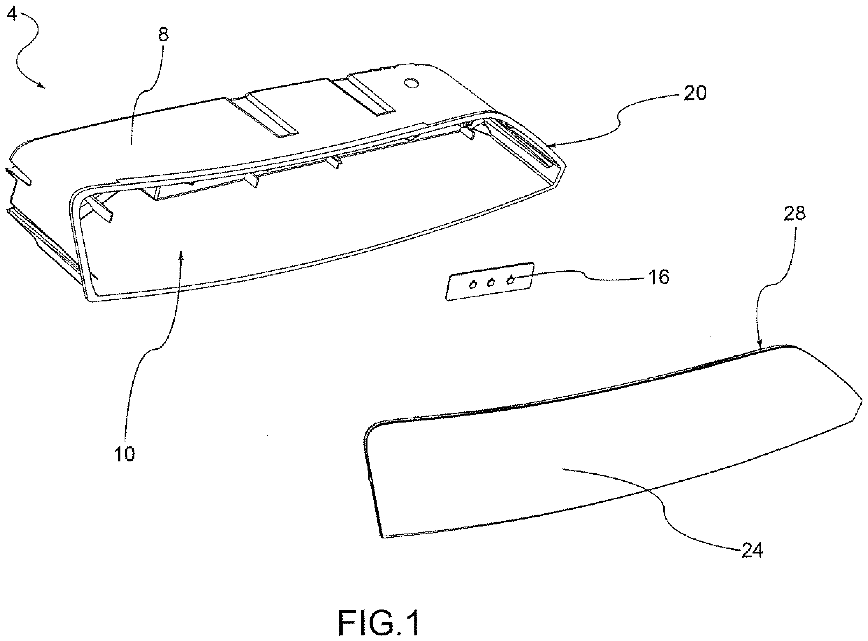

- figure 1 shows a perspective view in separate parts of an automotive light

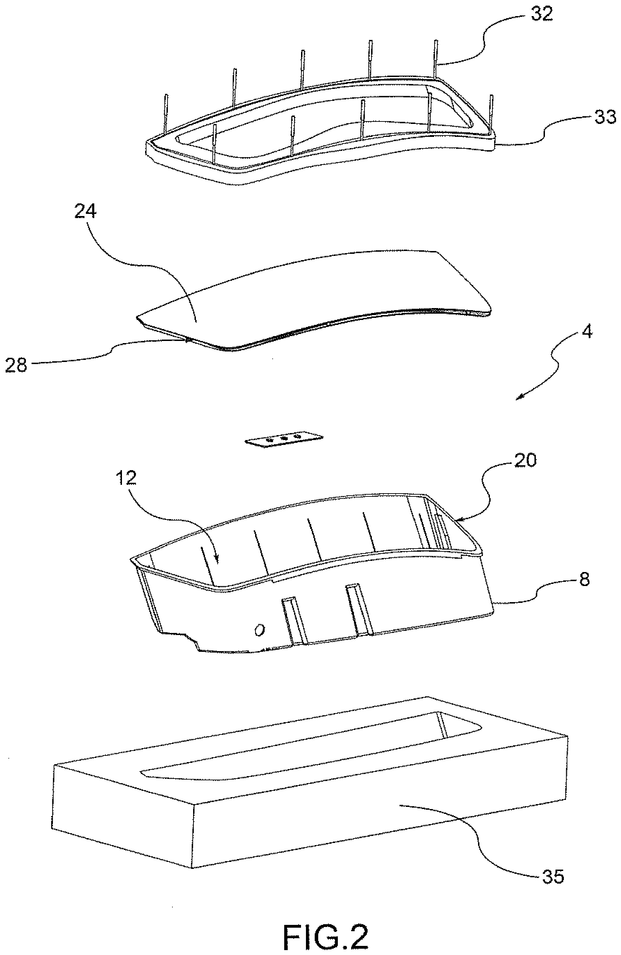

- figure 2 is a perspective view, in separate parts, of a complete automotive light equipment for performing the welding of an automotive light according to the present invention;

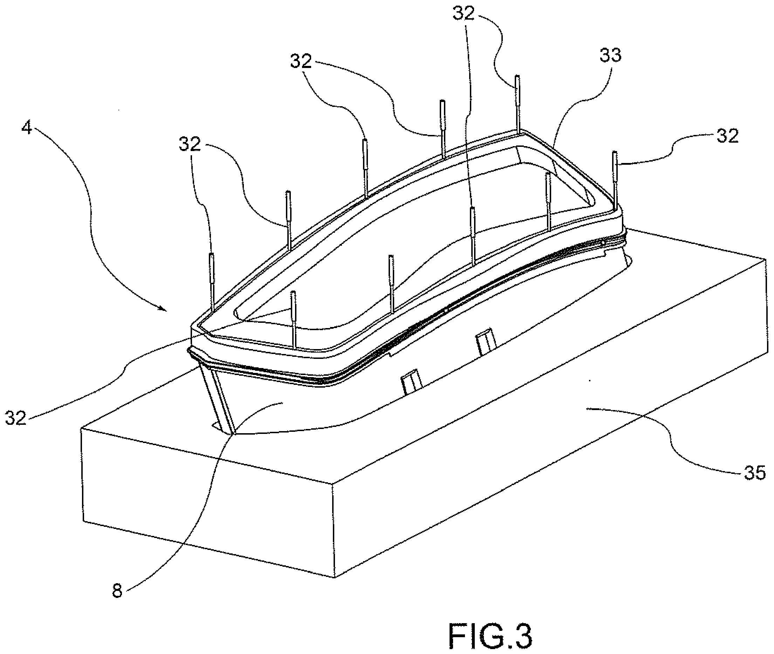

- figure 3 is a perspective view of the equipment in figure 2 in an assembled configuration;

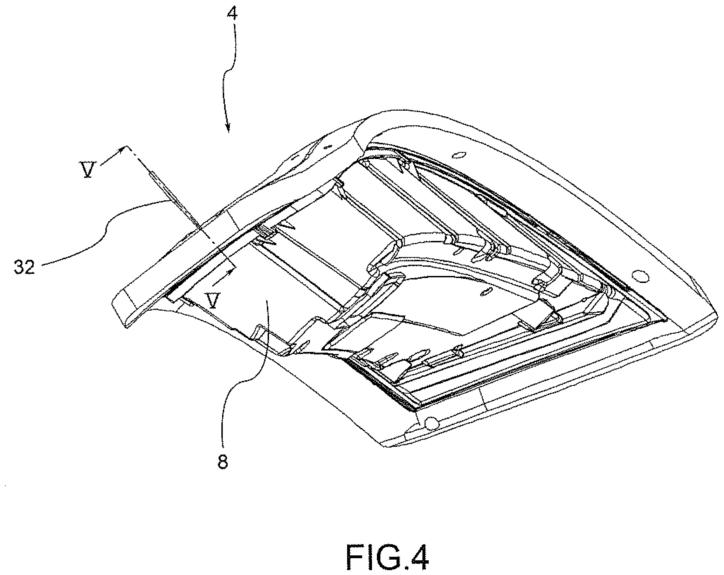

- figure 4 is a further perspective view of the equipment in figure 2;
- figure 5 shows a partial cross-section view of the equipment in figure 4, along the cross-section plane V-V in figure 4;
- figures 6-7 are cross-sectional views of the welding step of an automotive light according to different embodiments of the present invention.

The elements or parts of elements common to the embodiments described below will be indicated using the same reference numerals.

### DETAILED DESCRIPTION

With reference to the aforementioned figures, reference numeral 4 globally denotes an automotive light, which the description which follows refers to without by so doing losing its general application.

As mentioned above, the term automotive light is understood to mean indifferently a rear automotive light or a front automotive light, the latter also known as a headlight.

As known the automotive light comprises at least one outer light of the vehicle having a lighting and/or signalling function, such as for example a sidelight, which may be a front, rear or lateral sidelight, an indicator light, a brake light, a rear fog light, a dipped beam headlight, a main beam headlight and the like.

The automotive light 4 comprises a container body 8, usually of polymeric material, which typically permits the attachment of the automotive light 4 to the relative vehicle.

For the purposes of the present invention the container body 8 may be any shape and size and may even be an element inside the automotive light, for example, not directly associated for example to the bodywork or other fastenings of the associable vehicle.

According to one embodiment, the container body 8 delimits a containment housing 12 which houses at least one light source 16, electrically connected to electric connection means for supplying power thereto, and adapted to emit a light beam to propagate outside the automotive light. For the purposes of the present invention the type of light source 16 used is irrelevant; according to a possible embodiment, the light source 16 is a light source of light emitting diodes (LED).

The container body 8 is delimited by a first perimetral profile 20.

A lenticular body 24 in turn delimited by a second perimetral profile 28 is joined to the container body 8.

For the purposes of the present invention the lenticular body 24 may be either external to the automotive light 4, so as to define at least one outer wall of the automotive light directly subject to the atmosphere; for the purposes of the present invention the lenticular body may also be internal to the automotive light 4, i.e. not directly subject to the external atmosphere and in turn covered directly or indirectly by one or more screens or covering panels.

According to a possible embodiment, the lenticular body 24 is adapted to close the containment housing 12 and adapted to transmit to the outside of the automotive light 4 the light beam produced by the light source 16.

To such purpose, the lenticular body 24 is made of at least partially transparent or semi-transparent or translucent material, and may also comprise one or more opaque portions, so as to allow in any case the at least partial crossing of the light beam produced by the light source 16.

The second perimetral profile 28 is counter-shaped relative to the first perimetral profile 20 so as to be coupled with the latter according to a shaped coupling, in the assembled configuration of the automotive light 4.

The assembly of the automotive light 4 comprises the step of joining at least partially to each other the respective first and second perimetral profiles 20, 28. For example, the step is provided for of arranging the lenticular body 24 to close the containment housing 12 of the container body 8 so as to join the respective first and second perimetral profiles 20,28,

Advantageously, the method of manufacture of the automotive light according to the invention provides for joining the lenticular body and the container body to each other in correspondence of said perimetral profiles 20, 28, by means of laser welding.

The laser welding process may be realised with different techniques, for example, with simultaneous laser welding, almost-simultaneous laser welding, border laser welding, mask laser welding, radial laser welding, globe laser welding, etc.

In the description which follows however, specific reference will be made to simultaneous laser welding without by so doing losing its general application.

In particular, at least a laser source, not shown, is provided for which emits a laser beam or a light beam or an electromagnetic radiation having a characteristic emission spectrum. Characteristic emission spectrum is taken to mean an electromagnetic radiation emitted substantially at a certain frequency or having a certain wavelength. According to one embodiment, said laser source is a laser diode which emits a laser beam. According to possible further embodiments the laser source comprises a CO₂ laser, in which the laser beam is produced by a gas mixture comprising CO₂, or a YAG laser, in which the laser beam is produced by a solid state crystal.

The laser source emits a light beam that can be sent directly to the lenticular body 24; in a preferred embodiment the laser source is associated with an optical fibre 32 inserted in a matrix/guide 33 which has the function of supporting the optical fibre 32 as well as guiding the light beam emitted by the laser source.

The welding preferably takes place after blocking the container body 8 in a respective attachment block 35.

Advantageously the step of providing the lenticular body 24 envisages that said lenticular body 24 be obtained by means of a moulding technique so as to have a lenticular body 24 comprising at least a first and a second layer 36,40 at least partially overlapping and integral to each other.

According to a possible embodiment, the first layer 36 is facing the outside of the automotive light 4 and the second layer 40 is facing towards the containment housing 12.

Apart from the mutual positioning of the layers, said layers 36, 40 advantageously have different transmittance values in relation to the emission spectrum of the laser source.

In other words, the layers 36, 40 have different optical properties such that, in correspondence with the characteristic emission spectrum of the laser source, they show different transmittance values. Consequently, the light beam emitted by the laser source will be transmitted or absorbed by the two layers 36, 40 differently.

In particular, the welding of the lenticular body 24 on the container body 8 is a laser welding, wherein the light beam emitted by the laser source is routed towards the perimetral profiles 20, 28 so as to reach the first perimetral profile 20 of the container body 8 after passing through at least one of the layers 36, 40 of the lenticular body 24 having different transmittance values in relation to the emission spectrum.

During the welding step, the container body 8 acts as an absorbing member in relation to the light beam emitted by the laser source and the lenticular body 24 acts as a transmissive member of said light beam.

The light radiation emitted by the laser source passes through both the first layer 36 and the second layer 40 of the lenticular body 24 before reaching the welding area positioned at an interface 44 between the first and second perimetral profiles 20, 28.

According to one embodiment, one of said layers 36, 40 of the lenticular body 24 is a layer in a polymer material having transmittance values, measured in the emission spectrum of the laser source, greater than 90%.

For example, at least one of said layers 36, 40 of the lenticular body 24 is a layer made of a substantially clear material.

At least one of said layers 36, 40 is made of a polymer material having a desired colour, said layer 36, 40 having a transmittance sufficient to not soften the material hit by the light beam and to transmit the light beam towards the perimetral profiles 20, 28 and towards the interface 44.

It is possible to make the first layer 36 and the second layer 40 of the lenticular body 24 with the same material. For example the material of the first and/or second layer 36, 40 of the lenticular body 24 is a resin such as PMMA, PC and the like.

According to a preferred embodiment, the layer 36, 40 of the lenticular body 24 having the greater transmittance value has a greater thickness than the layer 40, 36 having a lower transmittance value.

According to a possible embodiment, the lenticular body 24 has an overall thickness of 4.5 mm, wherein 2 mm are for the layer 36, 40 having the lower transmittance value and 2.5 mm are for the layer 40, 36 having the greater transmittance value.

This way it will have a better energy efficiency since, for the same overall path, i.e. thickness of lenticular body 24 which must be traversed by the light beam to reach the interface 44, the path or route of the light beam with lower power consumption and therefore higher transmission efficiency is increased.

For the purposes of the present invention, said first and second layers 36, 40 of the lenticular body 24 are obtained by a technique of co-moulding.

For example the lenticular body 24 is obtained with a multicolour injection moulding technique, wherein an equipment is used provided with a mould consisting of a fixed platform having at least two matrix half-moulds, and a rotating platform having a punch half-mould, able to move relative to the fixed platform, so as to couple the punch half-mould with each matrix half-mould present on the fixed platform.

Regardless of the specific moulding technique used, the lenticular body 24 has, as seen, at least two layers 36,40 integral with each other and at least partially overlapping.

The two or more layers 36, 40 are preferably made of different colours: typically one of the layers is clear, or substantially transparent, the other is coloured since it has to filter the light emitted by the light source so that the light beam produced in output from the light has the desired colour; for example, red for a side light or stop light, orange for an indicator light and the like. The colouration, i.e. doping of the material to obtain a coloured layer of the lenticular body, modifies, for the same spectrum of the incident beam, the transmittance: in general, the transmittance increases in the absence of doping, i.e. in the presence of a clear layer and decreases as said doping increases.

As seen, for the purposes of the functions of an automotive light, assuming that the light sources commonly used emit substantially white light beams for example, the lenticular body 24 must have one or more coloured pieces so that the light beam in output has the desired colour.

In the solutions of the prior art, the lenticular bodies welded with laser technology have coloured portions in a single piece: in other words, the lenticular body is composed of a single coloured layer and then doped in the desired colour. This solution is not very efficient at the moment of trying to weld the lenticular body 24 to the container body 8 by means of laser welding. Advantageously, according to the present invention, the lenticular body instead comprises at least two layers coloured with different dopings in order to increase, at least partially, the overall transmittance of said lenticular body. This effect can be obtained by applying a clear layer (with transmittance greater than 90%) to a coloured layer, for example, red, with transmittance less than 90%, or overlapping two layers, both coloured, so as to provide a light in output of the desired colour and to have a total transmittance of the lenticular body better than in the case of a corresponding single coloured layer.

According to one embodiment, the lenticular body 24, at the second perimetral profile 28 comprises a second contact edge 48 with the container body 8 wherein said second contact edge 48 follows the respective second perimetral profile 28 and projects therefrom in the direction of the container body 8.

This way, the light radiation emitted by the laser source is directed so as to be channelled in the second contact edge 48 and to impact on the first perimetral profile 20 of the container body 8.

According to one embodiment, the second contact edge 48 is integral with the second layer 40 of the lenticular body 24. For example, the second layer 40 of the lenticular body 24 is the layer having a higher transmittance and also encompasses the second contact edge 48: this way it further increases the path of the light beam inside the layer having a higher transmittance.

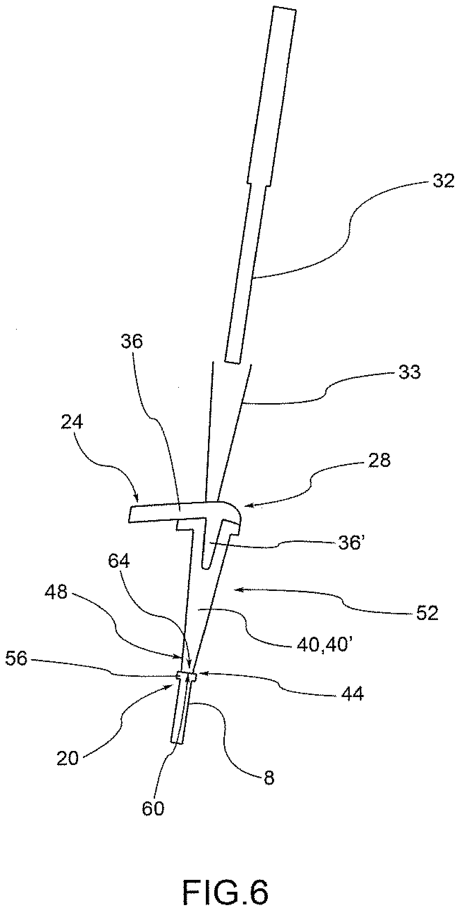

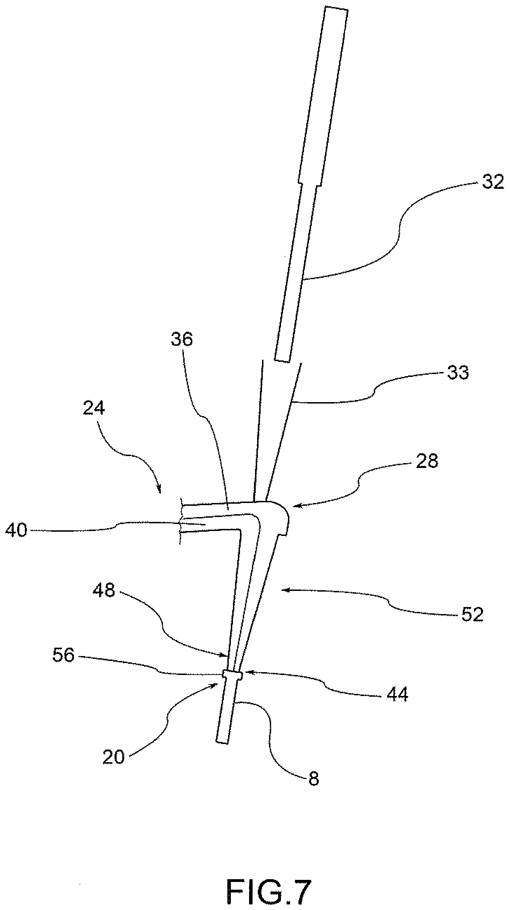

According to a further embodiment, the second contact edge 48 comprises overlapping portions of the first and second layers 36, 40 (figures 6-7).

For example (figure 6) said overlapping portions 36',40' comprise at least one protrusion 36' of the first layer 36 at least partially penetrated into the second contact edge 48 of the second layer 40.

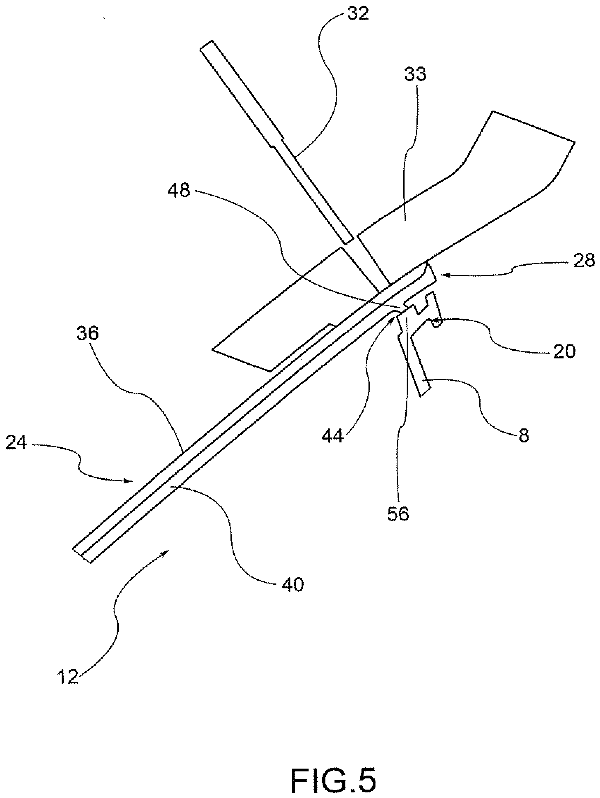

According to a possible welding technique, the light radiation emitted by the laser source is directed according to a direction substantially perpendicular to the layers 36, 40 of the lenticular body, at said perimetral profiles 20,28 (figure 5).

According to a further embodiment, the lenticular body 24 at the second perimetral profile 28, comprises a folded portion 52 towards the container body 8, the folded portion 52 being integral with the lenticular body 24 and defining the second contact edge 48 with the container body 8; the folded portion 52 comprising in turn an overlapping of the first and second layers 36, 40 of the lenticular body 24 (figure 6-7).

The light radiation emitted by the laser source is directed at the second contact edge 48 according to a direction substantially parallel to the layers 36, 40 of the lenticular body 24.

In this case also the light radiation is directed so as to channel itself into the second contact edge 48, along each of the layers 36, 40 of the lenticular body and to impact on the first perimetral profile 20.

According to a possible embodiment, the container body 8, at the first perimetral profile 20, comprises a first contact edge 56, in contact with the container body 8, said first contact edge 56 following the respective first perimetral profile 20 and projecting therefrom in the direction of the lenticular body 24.

The first perimetral profile 20 is at least partially counter-shaped relative to the second perimetral profile 28, and the first perimetral profile 20 has an abutment wall 60 which receives in abutment the second contact edge 56.

The abutment wall 60 forms the interface 44 between the lenticular body 24 and the container body 8.

Preferably, said abutment wall 60 has a thickness greater than or equal to a corresponding supporting wall 64 of the second contact edge 48.

As mentioned above, the laser welding techniques for the manufacturing method according to the present invention may be of various types; for example the laser welding step is performed by one or more optical fibres which simultaneously emit respective light radiation on separate, predetermined portions of said perimetral profiles 20, 28, according to a 'simultaneous' welding technique.

It is also possible to perform the laser welding step by means of at least one mobile laser source, with the relative optic fibres 32, which is guided so as to direct the light radiation along said perimetral profiles 20, 28, according to a 'border' welding technique.

As may be appreciated from the description, the manufacturing method according to the invention makes it possible to overcome the drawbacks of the prior art.

In particular, thanks to the method of the present invention it is possible to also apply the technique of laser welding to automotive lights having any type of complex geometry, having curvatures and thicknesses highly variable along the perimeter of the light.

The laser welding technique according to the present invention is not only not inconvenient compared to alternative welding techniques of the prior art but may even be better both in terms of cost and time, for the same quality of the welding joint, compared to the solutions of the prior art in the field of automotive lights.

In particular, thanks to the presence of at least two layers at different transmittance values with respect to the emission spectrum of the laser source, there is a reduction of consumption and therefore of costs since a greater part of the light beam can be transmitted to the welding interface between the lenticular body and the container body.

The light beam on the interface portion is thus suitable to obtain a welded joint having excellent mechanical qualities, without waste of luminous power.

Furthermore, the laser welding step, regardless of the technique used to perform it, for example of the 'border' or 'simultaneous' type, is quick and reliable, allowing a further reduction of assembly costs for the same quality of the joint compared to the prior art.

In addition, the moulding technique of the lenticular body comprising at least two layers makes it possible to obtain perimeter profiles and/or contact edges of the lenticular body having thicknesses greater than those obtainable using conventional moulding techniques. Thanks to the increased thickness of the perimetral profiles and relative contact edges of the lenticular body it is possible to channel and transmit to the container body a greater part of the light beam to the benefit of a greater heating of the weld joint and, therefore, an energy saving due to a greater energy efficiency.

Moreover, thanks to the increased thickness of the perimetral profiles and relative contact edges of the lenticular body, it is also possible to channel a light beam having a higher light output in order, for example, to weld in interface zones (between the lenticular body and the container body) relatively distant from the laser source emitter, for example, for automotive lights having particular geometries and particularly pronounced heights or thicknesses of the lenticular body.

In other words, if the lenticular body is particularly advanced or pronounced outwardly with respect to the interface surface, the light beam, while placing the laser source and the relative optical fibres at the limit of contact with the outer surface of the lenticular body, will have to cover a relatively long path before reaching said interface surface. During said path the light beam will be at least partially absorbed by the lenticular body and thus, in order to locally melt the container body (absorbent) at the interface surface, a high power light beam would need to be sent. This way, on the one hand would increase consumption and on the other risk producing unwanted melting or softening in different portions of the lenticular body. In other cases, the presence of overly narrow perimetral profiles and relative contact edges of the lenticular body would lead to the non-melting of the plastic material at the interface surface making the welding impossible.

Instead, thanks to the realization of the lenticular body of at least two layers, it is possible to create profiles and edges of adequate thickness, obtaining an effective transmission of the light beam at elevated distances or depths i.e. the distance between the outer surface of the lenticular body and the interface surface between the lenticular body and the container body, thus making laser welding with any geometry of the automotive light possible and efficient.

A person skilled in the art may make numerous modifications and variations to the methods of manufacture of automotive lights described above so as to satisfy contingent and specific requirements while remaining within the sphere of protection of the invention as defined by the following claims.

## Claims

1. A method of manufacture of an automotive light (4) comprising the steps of:
- providing a container body (8) delimited by a first perimetral profile (20),
- providing a lenticular body (24) delimited by a second perimetral profile (28),
- associating at least partially between each other the respective first and second perimetral profile (20,28) of the container body (8) and the lenticular body (24),
- welding at least partially between the lenticular body (24) and the container body (8) at said perimetral profiles (20,28),
- providing at least one laser source emitting a light beam or radiation having a characteristic emission spectrum,
- wherein the step of providing the lenticular body (24) envisages that said lenticular body (24) be obtained by means of a moulding technique so as to have a lenticular body (24) comprising at least a first and a second layer (36, 40) at least partially overlapping and integral to each other, with said layers (36,40) having different transmittance values in relation to the emission spectrum of the laser source,
- wherein the welding of the lenticular body (24) on the container body (8) is a laser welding, wherein the light beam emitted by the laser source is routed towards the perimetral profiles (20,28) so as to reach the first perimetral profile (20) of the container body (8) after passing through at least one of the layers (36,40) of the lenticular body (24) having different transmittance values in relation to the emission spectrum of the laser source,
- wherein the container body (8) acts as an absorbing member in relation to the light beam and the lenticular body (24) acts as a transmissive member of the light beam,
wherein the light radiation emitted by the laser source passes through both the first layer (36) and the second layer (40) of the lenticular body (24) before reaching the welding area positioned at an interface (44) between the first and second perimetral profiles (20,28),
wherein at least one of said layers (36,40) is made from a polymer material having a desired colour,
wherein said layers (36,40) have a transmittance sufficient to not soften the material hit by the light beam and to transmit the light beam towards the perimetral profiles (20, 28) and towards the interface (44), **characterized in that**
both of said layers (36,40) are able to be crossed by light emitted from a light source arranged inside the container body (8) for realizing a light of the automotive light.

2. A method of manufacture of an automotive light (4) according to claim 1, wherein the material of the first and second layer (36,40) of the lenticular body (24) is a resin such as PMMA, PC and the like.

3. A method of manufacture of an automotive light (4) according to claim 1 or 2, wherein the first layer (36) and the second layer (40) of the lenticular body (24) are made with the same material.

4. A method of manufacture of an automotive light (4) according to claim 1, comprising the steps of:
- providing a container body (8) delimiting a containment housing (12) which houses at least one light source (16), electrically connected to electric connection means for supplying power to the same, and adapted to emit a light beam to propagate outside the automotive light (4),
- providing a lenticular body (24), adapted to close the containment housing (12) and adapted to receive the light beam generated from the light source (16) and to propagate it outside the light (4),
- providing the lenticular body (24) in a closing position of the containment housing (12) of the container body (8) so as to associate with each other the respective first and second perimetral profiles (20,28),
- welding between the lenticular body (24) and the container body (8) at said perimetral profiles (20,28),
- wherein the first layer (36) of the lenticular body (24) faces towards the outside of the automotive light (4), the second layer (40) of the lenticular body (24) faces towards the containment housing (12), with said layers (36,40) having different transmittance values in relation to the emission spectrum of the laser source.

5. A method of manufacture of an automotive light (4) according to claim 1, 2, 3 or 4, wherein one of said layers (36,40) of the lenticular body (24) is a layer in a polymer material having transmittance values, in the emission spectrum of the laser source, greater than 90%.

6. A method of manufacture of an automotive light (4) according to any one of the preceding claims, wherein the layer (36, 40) of the lenticular body (24) having the greater transmittance value has a greater thickness than the layer (40,36) having a lower transmittance value.

7. A method of manufacture of an automotive light (4) according to any one of the preceding claims, wherein the lenticular body (24) has an overall thickness of 4.5 mm, wherein 2 mm are for the layer (36,40) having the lower transmittance value and 2.5 mm are for the layer (40,36) having the greater transmittance value.

8. A method of manufacture of an automotive light (4) according to any one of the preceding claims, wherein said first and second layers (36,40) of the lenticular body (24) are obtained by means of a co-moulding or over-pressing technique.

9. A method of manufacture of an automotive light (4) according to any one of the preceding claims, wherein the lenticular body (24) is obtained with an multicolour injection moulding technique, wherein an equipment is used which is provided with a mould consisting of a fixed platform having at least two matrix half-moulds, and a rotating platform having a punch half-mould, capable of moving relative to the fixed platform, so as to couple the punch half-mould to each matrix half-mould present on the fixed platform.

10. A method of manufacture of an automotive light (4) according to any one of the preceding claims, wherein the lenticular body (24), at the second perimetral profile (28), comprises a second contact edge (48) with the container body (8), said second contact edge (48) following the respective second perimetral profile (28) and projecting from the latter in the direction of the container body (8).

11. A method of manufacture of an automotive light (4) according to claim 10, wherein the second contact edge (48) is integral to the second layer (40) of the lenticular body (24).

12. A method of manufacture of an automotive light (4) according to claim 11, wherein the second layer (40) of the lenticular body (24) is the layer having greater transmittance.

13. A method of manufacture of an automotive light (4) according to any one of claims from 10 to 12, wherein the second contact edge (48) comprises overlapping portions of said first and second layers (36,40).

14. A method of manufacture of an automotive light (4) according to claim 13, wherein said overlapping portions comprise at least one protrusion (36') of the first layer (36) at least partially penetrated into the second contact edge (48) of the second layer (40).

15. A method of manufacture of an automotive light (4) according to any one of the preceding claims, wherein the light radiation emitted by the laser source is directed according to a direction substantially perpendicular to the layers (36,40) of the lenticular body (24), at said perimetral profiles (20,28).

16. A method of manufacture of an automotive light (4) according to any one of claims from 10 to 15, wherein the light radiation emitted by the laser source is directed so as to channel into the second contact edge (48) and to impact on the first perimetral profile (20).

17. A method of manufacture of an automotive light (4) according to claim 10, wherein the lenticular body (24) at the second perimetral profile (48), comprises a folded portion (52) towards the container body (8), with the folded portion (52) being integral with the lenticular body (24) and defining a second contact edge (48) with the container body (8), said folded portion (52) comprising an overlapping of the first and second layers (36, 40) of the lenticular body (24), wherein the light radiation emitted by the laser source is directed at the second contact edge (52) according to a direction substantially parallel to the layers (36,40) of the lenticular body (24), wherein the light radiation is directed so as to channel into the second contact edge (52), along each of the layers (36,40) of the lenticular body (24), and to impact on the first perimetral profile (20) .

18. A method of manufacture of an automotive light (4) according to any one of claims from 10 to 17, wherein the container body (8), at the first perimetral profile (20), comprises a first contact edge (56) with the container body (8), said first contact edge (56) following the respective first perimetral profile (20) and projecting from the latter in the direction of the lenticular body (24), wherein the first perimetral profile (20) is at least partially counter-shaped relative to the second perimetral profile (28), and wherein the first perimetral profile (20) has an abutment wall (60) receiving in abutment the second contact edge (48), said abutment wall (60) having a thickness greater than or equal to a corresponding support wall (64) of the second contact edge (48).

19. A method of manufacture of an automotive light (4) according to any one of the preceding claims, wherein the laser welding step takes place by means of one or more optical fibres that emit respective light radiations simultaneously on different predetermined portions of said perimetral profiles (20,28), according to a 'simultaneous' welding technique.

## Patentansprüche

1. Verfahren zum Herstellen eines Fahrzeuglichts (4), umfassend die Schritte:
- Bereitstellen eines Behälterkörpers (8), welcher ein erstes Umfangsprofil (20) begrenzt,
- Bereitstellen eines linsenförmigen Körpers (24), welcher ein zweites Umfangsprofil (28) begrenzt,
- Zuordnen wenigstens teilweise zwischen einander des entsprechenden ersten und zweiten Umfangsprofils (20, 28) des Behälterkörpers (8) und des linsenförmigen Körpers (24),
- Schweißen wenigstens teilweise zwischen dem linsenförmigen Körper (24) und dem Behälterkörper (8) an den Umfangsprofilen (20, 28),
- Bereitstellen wenigstens einer Laserquelle, welche einen Lichtstrahl oder eine Strahlung emittiert, welche ein charakteristisches Emissionsspektrum aufweist,
- wobei der Schritt des Bereitstellens des linsenförmigen Körpers (24) vorsieht, dass der linsenförmige Körper (24) mittels einer Formungstechnik erhalten wird, um einen linsenförmigen Körper (24) zu haben, welcher wenigstens eine erste und eine zweite Schicht (36, 40) umfasst, welche sich wenigstens teilweise überlappen und integral miteinander sind, wobei die Schichten (36, 40) unterschiedliche Transmissionswerte in Bezug auf das Emissionsspektrum der Laserquelle aufweisen,
- wobei das Schweißen des linsenförmigen Körpers (24) an den Behälterkörper (8) ein Laserschweißen ist, wobei der Lichtstrahl, welcher durch die Laserquelle emittiert wird, in Richtung der Umfangsprofile (20, 28) geleitet wird, um das erste Umfangsprofil (20) des Behälterkörpers (8) zu erreichen nachdem es durch wenigstens eine der Schichten (36, 40) des linsenförmigen Körpers (24) hindurchgetreten ist, welche verschiedene Transmissionswerte in Bezug auf das Emissionsspektrum der Laserquelle aufweisen,
- wobei der Behälterkörper (8) als ein Absorptionselement in Bezug auf den Lichtstrahl wirkt und der linsenförmige Körper (24) als ein Transmissionselement des Lichtstrahls wirkt,
wobei die Lichtstrahlung, welche durch die Laserquelle emittiert wird, durch sowohl die erste Schicht (36) als auch die zweite Schicht (40) des linsenförmigen Körpers (24) hindurchtritt bevor sie den Schweißbereich erreicht, welcher an einer Schnittstelle (44) zwischen den ersten und zweiten Umfangsprofilen (20, 28) positioniert ist,
wobei wenigstens eine der Schichten (36, 40) aus einem Polymermaterial hergestellt ist, welches eine gewünschte Farbe aufweist,
wobei die Schichten (36, 40) eine Transmittanz aufweisen, welche ausreichend ist, um das Material nicht aufzuweichen, welches durch den Lichtstrahl getroffen wird, und um den Lichtstrahl in Richtung der Umfangsprofile (20, 28) und in Richtung der Schnittstelle (44) zu übertragen,
**dadurch gekennzeichnet, dass** beide der Schichten (36, 40) in der Lage sind, von Licht gekreuzt zu werden, welches von einer Lichtquelle emittiert wird, welche innerhalb des Behälterkörpers (8) angeordnet ist, um ein Licht des Fahrzeuglichts zu realisieren.

2. Verfahren zum Herstellen eines Fahrzeuglichts (4) nach Anspruch 1, wobei das Material der ersten und der zweiten Schicht (36, 40) des linsenförmigen Körpers (24) ein Harz ist, wie beispielsweise PMMA, PC und dergleichen.

3. Verfahren zum Herstellen eines Fahrzeuglichts (4) nach Anspruch 1 oder 2, wobei die erste Schicht (36) und die zweite Schicht (40) des linsenförmigen Körpers (24) mit dem gleichen Material hergestellt werden.

4. Verfahren zum Herstellen eines Fahrzeuglichts (4) nach Anspruch 1, umfassend die Schritte:
- Bereitstellen eines Behälterkörpers (8), welcher ein Behältergehäuse (12) begrenzt, welches wenigstens eine Lichtquelle (16) aufnimmt, welche elektrisch mit elektrischen Verbindungsmitteln verbunden ist, um Leistung zu derselben zu liefern, und dazu eingerichtet ist, einen Lichtstrahl zu emittieren, um sich nach außerhalb des Fahrzeuglichts (4) auszubreiten,
- Bereitstellen eines linsenförmigen Körpers (24), welcher dazu eingerichtet ist, das Behältergehäuse (12) zu schließen und dazu eingerichtet ist, den Lichtstrahl zu empfangen, welcher von der Lichtquelle (16) erzeugt wird, und um ihn nach außerhalb des Lichts (4) auszubreiten,
- Bereitstellen des linsenförmigen Körpers (24) in einer geschlossenen Position des Behältergehäuses (12) des Behälterkörpers (8), um einander die entsprechenden ersten und zweiten Umfangsprofile (20, 28) zuzuordnen,
- Schweißen zwischen dem linsenförmigen Körper (24) und dem Behälterkörper (8) an den Umfangsprofilen (20, 28),
- wobei die erste Schicht (36) des linsenförmigen Körpers (24) in Richtung der Außenseite des Fahrzeuglichts (4) weist, die zweite Schicht (40) des linsenförmigen Körpers (24) in Richtung des Behältergehäuses (12) weist, wobei die Schichten (36, 40) unterschiedliche Transmissionswerte in Bezug auf das Emissionsspektrum der Laserquelle aufweisen.

5. Verfahren zum Herstellen eines Fahrzeuglichts (4) nach Anspruch 1, 2, 3 oder 4, wobei eine der Schichten (36, 40) des linsenförmigen Körpers (24) eine Schicht in einem Polymermaterial ist, welche in dem Emissionsspektrum der Laserquelle Transmissionswerte von größer 90% aufweist.

6. Verfahren zum Herstellen eines Fahrzeuglichts (4) nach einem der vorhergehenden Ansprüche, wobei die Schicht (36, 40) des linsenförmigen Körpers (24), welche den größeren Transmissionswert aufweist, eine größere Dicke aufweist als die Schicht (40, 36), welche einen geringeren Transmissionswert aufweist.

7. Verfahren zum Herstellen eines Fahrzeuglichts (4) nach einem der vorhergehenden Ansprüche, wobei der linsenförmige Körper (24) eine Gesamtdicke von 4,5 mm aufweist, wobei 2 mm für die Schicht (36, 40) sind, welche den geringeren Transmissionswert aufweist, und 2,5 mm für die Schicht (40, 36) sind, welche den größeren Transmissionswert aufweist.

8. Verfahren zum Herstellen eines Fahrzeuglichts (4) nach einem der vorhergehenden Ansprüche, wobei die ersten und zweiten Schichten (36, 40) des linsenförmigen Körpers (24) mittels einer Co-Formungs- oder einer Über-Presstechnik erhalten werden.

9. Verfahren zum Herstellen eines Fahrzeuglichts (4) nach einem der vorhergehenden Ansprüche, wobei der linsenförmige Körper (24) mit einer mehrfarbigen Spritzguss-Technik erhalten wird, wobei eine Ausrüstung verwendet wird, welche mit einer Form bereitgestellt ist, welche aus einer festen Plattform, welche wenigstens zwei Matrizen-Halbformen aufweist, und einer rotierenden Plattform besteht, welche eine Stempel-Halbform aufweist, welche in der Lage ist, sich relativ zu der festen Plattform zu bewegen, um die Stempel-Halbform mit jeder Matrizen-Halbform zu koppeln, welche an der festen Plattform vorhanden ist.

10. Verfahren zum Herstellen eines Fahrzeuglichts (4) nach einem der vorhergehenden Ansprüche, wobei der linsenförmige Körper (24) an dem zweiten Umfangsprofil (28) einen zweiten Kontaktrand (48) mit dem Behälterkörper (8) umfasst, wobei der zweite Kontaktrand (48) dem entsprechenden zweiten Umfangsprofil (28) folgt und von dem Letzteren in der Richtung des Behälterkörpers (8) vorsteht.

11. Verfahren zum Herstellen eines Fahrzeuglichts (4) nach Anspruch 10, wobei der zweite Kontaktrand (48) mit der zweiten Schicht (40) des linsenförmigen Körpers (24) integral ist.

12. Verfahren zum Herstellen eines Fahrzeuglichts (4) nach Anspruch 11, wobei die zweite Schicht (40) des linsenförmigen Körpers (24) die Schicht ist, welche eine größere Transmittanz aufweist.

13. Verfahren zum Herstellen eines Fahrzeuglichts (4) nach einem der Ansprüche von 10 bis 12, wobei der zweite Kontaktrand (48) überlappende Abschnitte der ersten und zweiten Schichten (36, 40) umfasst.

14. Verfahren zum Herstellen eines Fahrzeuglichts (4) nach Anspruch 13, wobei die überlappenden Abschnitte wenigstens einen Vorsprung (36') der ersten Schicht (36) umfassen, welcher wenigstens teilweise in den zweiten Kontaktrand (48) der zweiten Schicht (40) eindringt.

15. Verfahren zum Herstellen eines Fahrzeuglichts (4) nach einem der vorhergehenden Ansprüche, wobei die Lichtstrahlung, welche durch die Laserquelle emittiert wird, gemäß einer Richtung gerichtet wird, welche im Wesentlichen rechtwinklig zu den Schichten (36, 40) des linsenförmigen Körpers (24) an den Umfangsprofilen (20, 28) ist.

16. Verfahren zum Herstellen eines Fahrzeuglichts (4) nach einem der Ansprüche von 10 bis 15, wobei die Lichtstrahlung, welche durch die Laserquelle emittiert wird, gerichtet wird, um in den zweiten Kontaktrand (48) kanalisiert zu werden und an dem ersten Umfangsprofil (20) aufzutreffen.

17. Verfahren zum Herstellen eines Fahrzeuglichts (4) nach Anspruch 10, wobei der linsenförmige Körper (24) an dem zweiten Umfangsprofil (48) einen gefalteten Abschnitt (52) in Richtung des Behälterkörpers (8) umfasst, wobei der gefaltete Abschnitt (52) mit dem linsenförmigen Körper (24) integral ist und einen zweiten Kontaktrand (48) mit dem Behälterkörper (8) definiert, wobei der gefaltete Abschnitt (52) ein Überlappen der ersten und zweiten Schichten (36, 40) des linsenförmigen Körpers (24) umfasst, wobei die Lichtstrahlung, welche durch die Laserquelle emittiert wird, an dem zweiten Kontaktrand (52) gemäß einer Richtung gerichtet wird, welche im Wesentlichen parallel zu den Schichten (36, 40) des linsenförmigen Körpers (24) ist, wobei die Lichtstrahlung gerichtet wird, um in den zweiten Kontaktrand (52) entlang jeder der Schichten (36, 40) des linsenförmigen Körpers (24) kanalisiert zu werden und an dem ersten Umfangsprofil (20) aufzutreffen.

18. Verfahren zum Herstellen eines Fahrzeuglichts (4) nach einem der Ansprüche von 10 bis 17, wobei der Behälterkörper (8) an den ersten mUmfangsprofil (20) einen ersten Kontaktrand (56) mit dem Behälterkörper (8) umfasst, wobei der erste Kontaktrand (56) dem entsprechenden ersten Umfangsprofil (20) folgt und von dem Letzteren in der Richtung des linsenförmigen Körpers (24) vorsteht, wobei das erste Umfangsprofil (20) wenigstens teilweise bezüglich des zweiten Umfangsprofils (28) gegen geformt ist, und wobei das erste Umfangsprofil (20) eine Anlagewand (60) aufweist, welche in Anlage den zweiten Kontaktrand (48) empfängt, wobei die Anlagewand (60) eine Dicke aufweist, welche größer oder gleich einer entsprechenden Tragewand (64) des zweiten Kontaktrands (48) ist.

19. Verfahren zum Herstellen eines Fahrzeuglichts (4) nach einem der vorhergehenden Ansprüche, wobei der Laserschweiß-Schritt mittels einer oder mehreren optischen Fasern stattfindet, welche entsprechende Lichtstrahlungen gleichzeitig auf verschiedene vorbestimmte Bereiche der Umfangsprofile (20, 28) gemäß einer "gleichzeitigen" Schweißtechnik emittieren.

## Revendications

1. Procédé de fabrication d'un phare de véhicule (4) comprenant les étapes de :
- fourniture d'un corps de récipient (8) délimité par un premier profil périmétrique (20),
- fourniture d'un corps lenticulaire (24) délimité par un deuxième profil périmétrique (28),
- association au moins partielle entre eux du premier et deuxième profil périmétrique (20, 28) respectif du corps de récipient (8) et du corps lenticulaire (24),
- soudage au moins partiel entre le corps lenticulaire (24) et le corps de récipient (8) au niveau desdits profils périmétriques (20, 28),
- fourniture d'au moins une source laser émettant un faisceau de lumière ou rayonnement ayant un spectre d'émission caractéristique,
- dans lequel l'étape de fourniture du corps lenticulaire (24) envisage que ledit corps lenticulaire (24) soit obtenu au moyen d'une technique de moulage de façon à avoir un corps lenticulaire (24) comprenant au moins une première et une deuxième couche (36, 40) se chevauchant au moins partiellement et d'un seul tenant l'une l'autre, avec lesdites couches (36, 40) ayant différentes valeurs de transmittance par rapport au spectre d'émission de la source laser,
- dans lequel le soudage du corps lenticulaire (24) sur le corps de récipient (8) est un soudage laser, dans lequel le faisceau de lumière émis par la source laser est acheminé vers les profils périmétriques (20, 28) de façon à atteindre le premier profil périmétrique (20) du corps de récipient (8) après passage à travers au moins une des couches (36, 40) du corps lenticulaire (24) ayant différentes valeurs de transmittance par rapport au spectre d'émission de la source laser,
- dans lequel le corps de récipient (8) agit en tant qu'élément absorbant par rapport au faisceau de lumière et le corps lenticulaire (24) agit en tant qu'élément de transmission du faisceau de lumière,
dans lequel le rayonnement de lumière émis par la source lasser passe à travers la première couche (36) et la deuxième couche (40) du corps lenticulaire (24) avant d'atteindre la zone de soudage positionnée à une interface (44) entre les premier et deuxième profils périmétriques (20, 28),
dans lequel au moins une desdites couches (36, 40) est réalisée en un matériau polymère ayant une couleur souhaitée,
dans lequel lesdites couches (36, 40) ont une transmittance suffisante pour ne pas ramollir le matériau touché par le faisceau de lumière et pour transmettre le faisceau de lumière vers les profils périmétriques (20, 28) et vers l'interface (44),
**caractérisé en ce que**
les deux desdites couches (36, 40) sont aptes à être traversées par la lumière émise par une source de lumière agencée à l'intérieur du corps de récipient (8) pour la réalisation d'une lumière du phare de véhicule.

2. Procédé de fabrication d'un phare de véhicule (4) selon la revendication 1, dans lequel le matériau de la première et deuxième couche (36, 40) du corps lenticulaire (24) est une résine telle que PMMA, PC et similaire.

3. Procédé de fabrication d'un phare de véhicule (4) selon la revendication 1 ou 2, dans lequel la première couche (36) et la deuxième couche (40) du corps lenticulaire (24) sont réalisées avec le même matériau.

4. Procédé de fabrication d'un phare de véhicule (4) selon la revendication 1, comprenant les étapes de :
- fourniture d'un corps de récipient (8) délimitant un boîtier de confinement (12) qui loge au moins une source de lumière (16), reliée électriquement à des moyens de liaison électrique pour leur fournir de l'énergie, et adaptée pour émettre un faisceau de lumière pour se propager à l'extérieur du phare de véhicule (4),
- fourniture d'un corps lenticulaire (24), adapté pour fermer le boîtier de confinement (12) et adapté pour recevoir le faisceau de lumière généré par la source de lumière (16) et pour le propager à l'extérieur du phare (4),
- fourniture du corps lenticulaire (24) dans une position de fermeture du boîtier de confinement (12) du corps de récipient (8) de façon à associer entre eux les premier et deuxième profils périmétriques (20, 28) respectifs,
- soudage entre le corps lenticulaire (24) et le corps de récipient (8) au niveau desdits profils périmétriques (20, 28),
- dans lequel la première couche (36) du corps lenticulaire (24) est tournée vers l'extérieur du phare de véhicule (4), la deuxième couche (40) du corps lenticulaire (24) est tournée vers le boîtier de confinement (12), avec lesdites couches (36, 40) ayant différentes valeurs de transmittance par rapport au spectre d'émission de la source laser.

5. Procédé de fabrication d'un phare de véhicule (4) selon la revendication 1, 2, 3 ou 4, dans lequel une des dites couches (36, 40) du corps lenticulaire (24) est une couche en un matériau polymère ayant des valeurs de transmittance, dans le spectre d'émission de la source laser, supérieures à 90 %.

6. Procédé de fabrication d'un phare de véhicule (4) selon l'une quelconque des revendications précédentes, dans lequel la couche (36, 40) du corps lenticulaire (24) ayant la plus grande valeur de transmittance a une plus grande épaisseur que la couche (40, 36) ayant une plus petite valeur de transmittance.

7. Procédé de fabrication d'un phare de véhicule (4) selon l'une quelconque des revendications précédentes, dans lequel le corps lenticulaire (24) a une épaisseur totale de 4,5 mm, dans lequel 2 mm sont pour la couche (36, 40) ayant la plus petite valeur de transmittance et 2,5 mm sont pour la couche (40, 36) ayant la plus grande valeur de transmittance.

8. Procédé de fabrication d'un phare de véhicule (4) selon l'une quelconque des revendications précédentes, dans lequel lesdites première et deuxième couches (36, 40) du corps lenticulaire (24) sont obtenues au moyen d'une technique de co-moulage ou de surpressage.

9. Procédé de fabrication d'un phare de véhicule (4) selon l'une quelconque des revendications précédentes, dans lequel le corps lenticulaire (24) est obtenu avec une technique de moulage par injection multicolore, dans lequel un équipement est utilisé qui est doté d'un moule constitué d'une plateforme fixe ayant au moins deux demi-moules de matrice, et une plateforme rotative ayant un demi-moule de poinçon, capable de se déplacer par rapport à la plateforme fixe, de façon à coupler le demi-moule de poinçon à chaque demi-moule de matrice présent sur la plateforme fixe.

10. Procédé de fabrication d'un phare de véhicule (4) selon l'une quelconque des revendications précédentes, dans lequel le corps lenticulaire (24), au niveau du deuxième profil périmétrique (28), comprend un deuxième bord de contact (48) avec le corps de récipient (8), ledit deuxième bord de contact (48) suivant le deuxième profil périmétrique (28) respectif et faisant saillie de ce dernier en direction du corps de récipient (8).

11. Procédé de fabrication d'un phare de véhicule (4) selon la revendication 10, dans lequel le deuxième bord de contact (48) est formé d'un seul tenant avec la deuxième couche (40) du corps lenticulaire (24).

12. Procédé de fabrication d'un phare de véhicule (4) selon la revendication 11, dans lequel la deuxième couche (40) du corps lenticulaire (24) est la couche ayant la plus grande transmittance.

13. Procédé de fabrication d'un phare de véhicule (4) selon l'une quelconque des revendications 10 à 12, dans lequel le deuxième bord de contact (48) comprend des portions se chevauchant desdites première et deuxième couches (36, 40).

14. Procédé de fabrication d'un phare de véhicule (4) selon la revendication 13, dans lequel lesdites portions se chevauchant comprennent au moins une saillie (36') de la première couche (36) pénétrant au moins partiellement dans le deuxième bord de contact (48) de la deuxième couche (40).

15. Procédé de fabrication d'un phare de véhicule (4) selon l'une quelconque des revendications précédentes, dans lequel le rayonnement de lumière émis par la source laser est dirigé selon une direction sensiblement perpendiculaire aux couches (36, 40) du corps lenticulaire (24), au niveau desdits profils périmétriques (20, 28).

16. Procédé de fabrication d'un phare de véhicule (4) selon l'une quelconque des revendications 10 à 15, dans lequel le rayonnement de lumière émis par la source laser est dirigé de façon à canaliser dans le deuxième bord de contact (48) et à heurter le premier profil périmétrique (20).

17. Procédé de fabrication d'un phare de véhicule (4) selon la revendication 10, dans lequel le corps lenticulaire (24) au niveau du deuxième profil périmétrique (48), comprend une portion pliée (52) vers le corps de récipient (8), avec la portion pliée (52) formée d'un seul tenant avec le corps lenticulaire (24) et définissant un deuxième bord de contact (48) avec le corps de récipient (8), ladite portion pliée (52) comprenant un chevauchement des première et deuxième couches (36, 40) du corps lenticulaire (24), dans lequel le rayonnement de lumière émis par la source laser est dirigé au niveau du deuxième bord de contact (52) selon une direction sensiblement parallèle aux couches (36, 40) du corps lenticulaire (24), dans lequel le rayonnement de lumière est dirigé de façon à se canaliser dans le deuxième bord de contact (52), le long de chacune des couches (36, 40) du corps lenticulaire (24), et à frapper sur le premier profil périmétrique (20).

18. Procédé de fabrication d'un phare de véhicule (4) selon l'une quelconque des revendications 10 à 17, dans lequel le corps de récipient (8), au niveau du premier profil périmétrique (20), comprend un premier bord de contact (56) avec le corps de récipient (8), ledit premier bord de contact (56) suivant le premier profil périmétrique (20) respectif et faisant saillie de ce dernier dans la direction du corps lenticulaire (24), dans lequel le premier profil périmétrique (20) est au moins partiellement en contre-forme par rapport au deuxième profil périmétrique (28), et dans lequel le premier profil périmétrique (20) a une paroi de butée (60) recevant en butée le deuxième bord de contact (48), ladite paroi de butée (60) ayant une épaisseur supérieure ou égale à une paroi de support correspondante (64) du deuxième bord de contact (48).

19. Procédé de fabrication d'un phare de véhicule (4) selon l'une quelconque des revendications précédentes, dans lequel l'étape de soudage laser a lieu au moyen d'une ou plusieurs fibres optiques, qui émettent des rayonnements de lumière respectifs simultanément sur différentes portions prédéterminées desdits profils périmétriques (20, 28), selon une technique de soudage « simultanée ».
